(19) Europäisches Patentamt
European Patent Office
Office européen des brevets

(11) **EP 4 456 241 A1**

(12) **EUROPEAN PATENT APPLICATION**
published in accordance with Art. 153(4) EPC

(43) Date of publication:
**30.10.2024 Bulletin 2024/44**

(21) Application number: **23816369.5**

(22) Date of filing: **31.05.2023**

(51) International Patent Classification (IPC):
*H01M 10/0565* (2010.01)    *H01M 10/0564* (2010.01)
*H01M 10/052* (2010.01)    *C08J 5/22* (2006.01)

(52) Cooperative Patent Classification (CPC):
**C08J 5/22; H01M 10/052; H01M 10/0564;
H01M 10/0565;** Y02E 60/10

(86) International application number:
**PCT/KR2023/007469**

(87) International publication number:
**WO 2023/234709 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.05.2022  KR 20220067041**

(71) Applicant: **LG Energy Solution, Ltd.
Seoul 07335 (KR)**

(72) Inventors:
• **NAM, Sunghyun**
  **Daejeon 34122 (KR)**
• **LEE, Jung Pil**
  **Daejeon 34122 (KR)**
• **HAN, Hyeaeun**
  **Daejeon 34122 (KR)**
• **KIM, Dong Kyu**
  **Daejeon 34122 (KR)**

(74) Representative: **Hoffmann Eitle
Patent- und Rechtsanwälte PartmbB
Arabellastraße 30
81925 München (DE)**

(54) **POLYMER SOLID ELECTROLYTE AND MANUFACTURING METHOD THEREFOR**

(57)    The present disclosure relates to a polymer solid electrolyte and a manufacturing method therefor. More specifically, the polymer solid electrolyte comprises a cross-linked structure formed by cross-linkable functional groups, the cross-linked structure including (a) cross-linkages between the cross-linkable functional groups, (b) cross-linkages between the cross-linkable functional groups and a solvent, and (c) linkages between the cross-linkable functional groups and a lithium salt, and thus the polymer solid electrolyte can have a reduction in crystallinity and an improvement in ion conductivity even without using a separate plasticizer.

【Figure 1】

EP 4 456 241 A1

**Description**

[Technical Field]

The present application claims the benefits of priorities based on Korean Patent Application No. 10-2022-0067041 filed on May 31, 2022 and Korean Patent Application No. 10-2023-0070049 filed on May 31, 2023.
The present disclosures relates to a polymer solid electrolyte and a method for preparing the same.

[Background Art]

In the case of a lithium secondary battery using a liquid electrolyte, if the separator is damaged by deformation or external impact due to the structure in which the negative electrode and the positive electrode are partitioned by the separator, a short circuit may occur, which may lead to a risk of overheating or explosion. Therefore, it can be said that the development of a solid electrolyte that can secure safety in the field of the lithium secondary battery is a very important task.
A lithium secondary battery using a solid electrolyte has the advantages of increasing the safety of the battery and preventing the leaching of the electrolyte solution, thereby improving the reliability of the battery and making it easy to manufacture a thin battery. In addition, in the case of lithium secondary batteries using solid electrolytes, since lithium metal can be used as a negative electrode, energy density can be improved, and it is expected to be applied to a high-capacity secondary battery for electric vehicles, etc., in addition to a small secondary battery, and thus it is in the spotlight as a next-generation battery.
Among solid electrolytes, a polymer material of an ion conductive material can be used as a raw material for a polymer solid electrolyte, and also a hybrid type material in which a polymer material and an inorganic material are mixed has been proposed. As the inorganic material, an inorganic material such as oxide or sulfide may be used.
Such a conventional polymer solid electrolyte was prepared through a process of forming a coating film and then drying it at a high temperature. However, in the conventional preparation technology for polymer solid electrolytes, there was a limitation that it was difficult to prepare a polymer solid electrolyte with improved ionic conductivity due to the high crystallinity of crystalline polymers or semi-crystalline polymers. That is, the higher the crystallinity of the polymer, the lower the mobility of the polymer chain, and thus, there is a restriction in the movement of lithium ions inside the polymer solid electrolyte, which makes it difficult to improve the ionic conductivity of the polymer solid electrolyte.
For example, the conventional polymer solid electrolyte can be prepared through a process of forming a coating film using polyvinyl alcohol (PVA) containing a hydroxyl group, which is a cross-linkable functional group, as a polymer, and then, drying it at a high temperature. Specifically, the above-described PVA is dissolved in water to prepare a PVA aqueous solution, and then, the PVA aqueous solution is applied on a substrate by solution casting to form a coating film, and dried at room temperature or high temperature to prepare a polymer solid electrolyte in the form of a PVA film. In this case, the high temperature may mean 80°C or higher, which is a glass transition temperature (Tg) of PVA. In the drying process, hydrogen bonds between cross-linkable functional groups contained in PVA are formed after the evaporation of moisture, and polymer chain folding occurs due to the hydrogen bonds, resulting in a phenomenon in which the crystallinity of the polymer film is increased. As the degree of crystallinity is increased, a polymer film having brittleness is formed. In the polymer film having high crystallinity and brittleness, when the mobility of the polymer chain is reduced and dissociated ions exist inside the polymer film, ion mobility is also significantly reduced. For these reasons, a general PVA film, which is prepared by forming a coating film, and then drying it at a high temperature, as described above, exhibits physical properties that are not suitable for a polymer solid electrolyte for lithium secondary batteries.
In order to overcome these limitations in the polymer solid electrolyte in the prior art, a technology to improve the mobility of the polymer chain by adding a plasticizer to a crystalline polymer or semi-crystalline polymer and improve the ionic conductivity of the polymer solid electrolyte has been developed. However, when using a plasticizer, it may be difficult to set the conditions for the process because appropriate dispersion and miscibility between the polymer and the plasticizer must be secured. In addition, when a plasticizer having a liquid phase is applied, compatibility with the polymer is reduced, so it may be difficult to perform the manufacturing process of the polymer solid electrolyte.
Accordingly, there is a demand for the development of a technology that can improve the ionic conductivity of the polymer solid electrolyte without a separate additive such as a plasticizer.

[Prior Art Document]

[Patent Document]

(Patent Document 1) Chinese Laid-open Patent Publication No. 112259788

[Disclosure]

[Technical Problem]

It is an object of the present disclosures to provide a polymer solid electrolyte with improved ionic conductivity.

It is another object of the present disclosures to provide a method for preparing a polymer solid electrolyte having improved ionic conductivity.

It is still another object of the present disclosures to provide an all-solid battery containing a polymer solid electrolyte with improved ionic conductivity.

[Technical Solution]

In order to achieve the above objects, the present disclosures provides a polymer solid electrolyte comprising a polymer containing a cross-linkable functional group, a lithium salt, and a solvent, wherein the polymer solid electrolyte comprises a cross-linked structure; and an amorphous polymer chain containing the cross-linkable functional group, and the cross-linked structure comprises (a) a crosslinking between cross-linkable functional group, (b) a crosslinking between cross-linkable functional group and the solvent, and (c) bonding between cross-linkable functional groups and lithium salt.

The present disclosures provides a method for preparing a polymer solid electrolyte, the method comprising the steps of (S1) adding lithium salt to the solution of a polymer containing a cross-linkable functional group to form a solution for forming the polymer solid electrolyte; (S2) forming a coating film by applying the solution for forming a polymer solid electrolyte on a substrate; and (S3) freezing and thawing the coating film.

The present disclosures also provide an all-solid battery comprising the polymer solid electrolyte.

[Advantageous Effects]

The polymer solid electrolyte according to the present disclosures may comprise a polymer with reduced crystallinity and thus have improved ionic conductivity, due to the cross-linked structure formed by the cross-linkable functional group contained in the polymer and the structure containing the amorphous polymer chain.

In addition, the polymer solid electrolyte has reduced brittleness and exhibits physical properties of increased ductility and viscosity, due to the above structural features.

[Description of Drawings]

FIG. 1 is a graph showing the tendency of the ionic conductivity of the electrolyte according to the molar ratio ([Li]/[OH]) of the cross-linkable functional group and the lithium salt.

FIG. 2 is a photograph showing the form of electrolyte according to the molar ratio ([Li]/[OH]) of the cross-linkable functional group and lithium.

[Best Mode]

Hereinafter, the present disclosure will be described in more detail to help the understanding of the present disclosure.

The terms and words used in the present specification and claims should not be construed as limited to ordinary or dictionary terms, and should be construed in a sense and concept consistent with the technical idea of the present disclosure, based on the principle that the inventor can properly define the concept of a term to describe his invention in the best way possible.

The term "cross-linked structure" used herein refers to a structure that comprises a frame having a three-dimensional shape formed by polymer chains and an internal space of the frame. The polymer chain may be formed by cross-linking involving cross-linkable functional groups contained in the polymer. The cross-linked structure has a three-dimensional shape and has polymer chains entangled with each other, and thus it can also be called a three-dimensional network structure.

**Polymer solid electrolyte**

The present disclosures relates to a polymer solid electrolyte.

The polymer solid electrolyte according to the present disclosures is a polymer solid electrolyte comprising a polymer containing a cross-linkable functional group, a lithium salt, and a solvent, wherein the polymer solid electrolyte comprises a cross-linked structure; and an amorphous polymer chain containing the cross-linkable functional group, and the cross-linked structure comprises (a) a crosslinking between cross-linkable functional group, (b) crosslinking of a cross-linkable functional group with a solvent, and (c) bonding of a cross-linkable functional group and lithium salt. Specifically, the amorphous polymer chain and lithium salt are comprised in the inner space formed in the cross-linked structure, and the lithium salt is comprised in a dissociated state.

In addition, the cross-linked structure may be formed in a freezing process as will be described later. In the freezing process, some of the cross-linkable functional groups included in the polymer form localized crystallites, and the localized crystallites act as a cross-linkable junction point to crosslink, thereby forming the cross-linked structure. In this case, the crystallites mean a shape such as a knot made by tangled yarn, unlike a crystal structure by folding of a polymer chain.

In the present disclosure, (a) crosslinking between cross-linkable functional groups may comprise a hydrogen bond between cross-linkable functional groups, for example, the hydrogen bond may be a hydrogen bond between $OH^-$.

If the cross-linked structure is formed only by (a) crosslinking between the cross-linkable functional groups, crystallinity of the polymer solid electrolyte may occur and ionic conductivity may be reduced.

However, since the cross-linked structure comprises together (a) crosslinking between cross-linkable functional groups, (b) crosslinking of a cross-linkable functional group with a solvent, and (c) bonding of a cross-linkable functional group and lithium salt, it is possible to prevent the occurrence of crystallinity of the polymer solid electrolyte.

In the present disclosure, (b) crosslinking of a cross-linkable functional group with a solvent comprises a hydrogen bond, for example, the hydrogen bond may be a hydrogen bond between $OH^-$ and $H^+$. In this case, $H^+$ may be derived from a water solvent.

The (b) crosslinking of a cross-linkable functional group with a solvent may mean hydrogen bonding between some solvents remaining in the freezing and thawing process and a cross-linkable functional group.

In addition, (b) crosslinking of a cross-linkable functional group with a solvent interferes with (a) crosslinking between cross-linkable functional groups, and thus since the cross-linked structure does not consist only of (a) crosslinking between cross-linkable functional groups, it is possible to prevent an increase in the crystallinity of the polymer solid electrolyte.

In the present disclosure, (c) bonding of a cross-linkable functional group and lithium salt may comprise a bond by a Lewis acid-base interaction, and for example, the bond may be a bond between $OH^-$ and $Li^+$.

The (c) bonding of a cross-linkable functional group and lithium salt is a bond by Lewis acid-base interaction, and may be a bond of the same type as a metal-ligand bond.

In addition, (c) bonding of a cross-linkable functional group and lithium salt interferes with (a) crosslinking between cross-linkable functional groups and (b) crosslinking of a cross-linkable functional group with a solvent, so that cross-linked structure does not consist only of (a) crosslinking between cross-linkable functional groups, and therefore, it is possible to prevent the occurrence of crystallinity of the polymer solid electrolyte and at the same time, promote the formation of amorphous polymer chains. As the amorphous polymer chains are formed, the mobility of the polymer chain is improved, the hopping effect of the lithium ion is increased, and the ionic conductivity of the polymer solid electrolyte can be improved.

In the present disclosure, the amorphous polymer chains can also be formed in a freezing process as described below, and refers to polymer chains that do not form crystals by regular folding of polymer chains and exist in a state free from motion. That is, the amorphous polymer chain may comprise a polymer containing cross-linkable functional groups that do not form the bonds as in (a), (b) and (c) above.

Due to the cross-linked structure, since the polymer solid electrolyte is not easily broken or destroyed, it can serve as a support for the electrolyte containing lithium ions stably.

In addition, due to the amorphous polymer chain, the polymer solid electrolyte exhibits elasticity to minimize brittleness, which is a property of being easily broken, and as the mobility of the polymer chain is excellent, the mobility of lithium ions inside the electrolyte is improved, so it is possible to provide a polymer solid electrolyte with improved ionic conductivity.

In the present disclosure, the cross-linkable functional group contained in the polymer containing the cross-linkable functional group may have a property of forming a cross-linked structure by forming the bonds as in (a), (b) and (c) above.

For example, the cross-linkable functional group may comprise one or more selected from the group consisting of a hydroxyl group, a carboxyl group, and an amide group.

In addition, the weight average molecular weight (Mw) of the polymer containing the cross-linkable functional group may be 80,000 g/mol to 130,000 g/mol, and specifically, may be 80,000 g/mol or more, 83,000 g/mol or more, or 85,000 g/mol or more, and 90,000 g/mol or less, 110,000 g/mol or less, or 130,000 g/mol or less. If the weight average molecular weight (Mw) of the polymer containing the cross-linkable functional group is less than 80,000 g/mol, bonding by the cross-linkable functional group may not be sufficiently formed to obtain a cross-linked structure. If the weight average molecular weight (Mw) of the polymer containing the cross-linkable functional group exceeds 130,000 g/mol, the entanglement of the polymer chain in the polymer solution used in the preparation process is increased, and the penetration rate of the solvent into the interior of the polymer chain is reduced. Accordingly, the gelation of the polymer is accelerated, the miscibility of the polymer is lowered, and the bonding by the cross-linkable functional group cannot be smoothly made, so that it may not be easy to form a cross-linked structure.

In addition, in the case of the polymer containing the cross-linkable functional group, it may have a characteristic that phase-separation between the polymer and the solvent in the polymer solution used in the preparation process is smoothly made, so that when frozen, the (a), (b) and (c) bonds are well formed by the cross-linkable functional group contained in the phase-separated polymer.

For example, the polymer containing the cross-linkable functional group may comprise one or more selected from the group consisting of polyvinyl alcohol (PVA), gelatin, methylcellulose, agar, dextran, poly(vinyl pyrrolidone), poly(ethylene oxide), poly(acryl amide), poly(acrylic acid) (PAA), starch-carboxymethyl cellulose, hyaluronic acid-methylcellulose, chitosan, poly(N-isopropylacrylamide), and amino-terminated polyethylene glycol (amino-terminated PEG). Preferably, the polymer containing the cross-linkable functional group may be PVA. In the case of the PVA, phase separation between the PVA and the solvent can be efficiently achieved during freezing in the preparation of the polymer solid electrolyte, and it may be advantageous to form a cross-linked structure, by the (a), (b) and (c) bonds derived from the cross-linkable functional group of PVA which was phase-separated from the solvent.

In the present disclosure, the lithium salt is contained in a dissociated state in the inner space of the cross-linked structure, thereby improving the ionic conductivity of the polymer solid electrolyte.

In addition, the lithium salt can form (c) bonding of a cross-linkable functional group and lithium salt, thereby preventing the occurrence of crystallinity of the polymer solid electrolyte and at the same time, promoting the formation of an amorphous polymer chain.

The lithium salt may comprise one or more selected from the group consisting of $(CF_3SO_2)_2NLi$ (lithium bis(trifluoromethanesulfonyl)imide, LiTFSI), $(FSO_2)_2NLi$ (lithium bis(fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, and $LiC(CF_3SO_2)_3$.

In the present disclosure, the molar ratio ([Li]/[G]) of the cross-linkable functional group ([G]) of the polymer containing the cross-linkable functional group and lithium ([Li]) of the lithium salt comprised in the polymer solid electrolyte may be exceeding 0.1 and less than 0.5, and specifically may be exceeding 0.1, greater than 0.2, or greater than 0.3, and may be less than or equal to 0.4 or less than 0.5. If the molar ratio ([Li]/[G]) is 0.1 or less, the content of the lithium salt may be reduced and thus the ionic conductivity of the polymer solid electrolyte may be reduced. If the molar ratio ([Li]/[G]) is 0.5 or more, the content of the polymer including the cross-linkable functional group is reduced, so that the (a), (b) and (c) bonds may not be sufficiently formed, and thus crystallinity may be increased and ionic conductivity may be decreased. If the cross-linkable functional group is a hydroxyl group ($OH^-$), the [G] may be expressed as [OH] or [O].

In the present disclosure, the polymer solid electrolyte may be in the form of a free-standing film or the form of a coating layer. The free-standing film refers to a film capable of maintaining the form of a film by itself without a separate support at room temperature and atmospheric pressure. The coating layer refers to a layer obtained by coating on a substrate.

Since the free-standing film or coating layer exhibits elasticity to minimize brittleness and has characteristics as a support stably containing lithium ions, it may be in a form suitable as a polymer solid electrolyte.

In the present disclosure, the ionic conductivity of the polymer solid electrolyte may be $10^{-4}$ S/cm or more.

The polymer solid electrolyte has lower crystallinity due to its structural characteristics including the cross-linked structure as described above, and thus has improved ionic conductivity. Accordingly, even though it is a solid electrolyte, it can improve the performance of all-solid-state batteries by exhibiting ionic conductivity at an equivalent level or higher than that of conventional liquid electrolytes.

In the present disclosure, the polymer solid electrolyte may further comprise a liquid electrolyte, and may further improve the ionic conductivity of the polymer solid electrolyte due to the liquid electrolyte. The liquid electrolyte may also be contained in the inner space of the crosslinked structure.

The liquid electrolyte may be a liquid electrolyte commonly used in the art, and is not particularly limited as long as the composition of the liquid electrolyte can be used in a lithium secondary battery. For example, the liquid electrolyte may comprise a lithium salt and a non-aqueous solvent. The lithium salt may be one of the lithium salts described above. In addition, the non-aqueous solvent may comprise one or more selected from the group consisting of propylene carbonate (PC), ethylene carbonate (EC), vinylene carbonate (VC), diethyl carbonate (DEC), dimethyl carbonate (DMC), methyl ethyl carbonate (MEC), ethylmethylcarbonate (EMC), tetrahydrofuran (THF), 2-methyltetrahydrofuran (2MeTHF), dioxolane (DOX), dimethoxyethane (DME), diethoxyethane (DEE), γ-butyrolactone (GBL), acetonitrile (AN), and sulfolane.

In addition, the liquid electrolyte may be contained in an amount of 1 to 5% by weight based on the total weight of the polymer solid electrolyte. If the content of the liquid electrolyte is 1% by weight or less, the effect of improving the ionic conductivity may be insignificant. If the content of the liquid electrolyte exceeds 5% by weight, stability may be reduced.

The polymer solid electrolyte as described above can be prepared in a form comprising a cross-linked structure by bonds such as (a), (b) and (c) formed by the cross-linkable functional group contained in the polymer, and an amorphous polymer chain containing a polymer having a cross-linkable functional group that does not form crosslinking. Due to such morphological characteristics, the polymer solid electrolyte can serve as a support stably containing lithium ions, can exhibits elasticity to minimize brittleness, and can prevents crystallinity from occurring, so that ionic conductivity can be improved.

**Preparation method of polymer solid electrolyte**

The present disclosure also relates to a method for preparing a polymer solid electrolyte comprising the steps of (S1) adding lithium salt to the solution of a polymer containing a cross-linkable functional group to form a solution for forming a polymer solid electrolyte; (S2) forming a coating film by applying the solution for forming a polymer solid electrolyte on a substrate; and (S3) freezing and thawing the coating film.

In the preparation method of the polymer solid electrolyte, it is possible to prevent crystallization of the polymer, and as a result, it is possible to prepare a polymer solid electrolyte with improved ionic conductivity, by inducing (a) crosslinking between cross-linkable functional groups, (b) crosslinking of a cross-linkable functional group with a solvent, and (c) bonding of a cross-linkable functional group and lithium salt, by the cross-linkable functional group contained in the polymer through the freezing process, without adding the plasticizer used to lower the crystallinity of the polymer.

Hereinafter, the preparation method of the polymer solid electrolyte according to the present disclosure will be described in more detail for each step.

In the present disclosure, in step (S1), lithium salt may be added to the solution of a polymer containing a cross-linkable functional group to form a solution for forming a polymer solid electrolyte. The type and physical properties of the polymer containing the cross-linkable functional group and lithium salt are the same as described above.

The solvent used in preparing the polymer solution may be a polar solvent, for example, water. That is, the polymer solution may be an aqueous polymer solution.

The concentration of the solution of the polymer containing the cross-linkable functional group can be appropriately adjusted in consideration of the degree to which the application process can proceed smoothly, when the solution for forming the polymer solid electrolyte is applied to the substrate. For example, the concentration of the solution of the polymer containing the cross-linkable functional group may be 5% to 20%, and specifically, may be 5% or more, 7% or more, or 9% or more, and 13% or less, 17% or less, or 20% or less. If the concentration of the solution of the polymer containing the cross-linkable functional group is less than 5%, the concentration is too dilute and may flow down when applied on the substrate. If the concentration of the solution of the polymer containing the cross-linkable functional group exceeds 20%, it is difficult to dissolve lithium salt at a desired concentration in the solution of polymer, and it may be difficult to apply in the form of a uniform thin film due to its high viscosity.

In the present disclosure, in step (S2), the solution for forming a polymer solid electrolyte may be applied on a substrate to form a coating film.

The substrate is not particularly limited as long as it can serve as a support to which the solution for forming the polymer solid electrolyte is applied. For example, the substrate may be Stainless Use Steel (SS), polyethylene terephthalate film, polytetrafluoroethylene film, polyethylene film, polypropylene film, polybutene film, polybutadiene film, vinyl chloride copolymer film, polyurethane film, ethylene-vinyl acetate film, ethylenepropylene copolymer film, ethylene-ethyl acrylate copolymer film, ethylene-methyl acrylate copolymer film, or polyimide film.

In addition, the coating method is not particularly limited as long as it is a method capable of applying the solution for forming a polymer solid electrolyte on the substrate in the form of a film. For example, the coating method may be bar coating, roll coating, spin coating, slit coating, die coating, blade coating, comma coating, slot die coating, lip coating, or solution casting.

In the present disclosure, in step (S3), the coating film may be frozen and thawed to form a cross-linked structure. That is, in the freezing process, the bonds of (a), (b) and (c) are induced by the cross-linkable functional group to form a cross-linked structure, and an amorphous polymer chain may be formed.

In the freezing process, a polymer and water contained in an aqueous solution of a polymer containing a cross-linkable functional group used to form the coating film may be phase-separated. The phase separation may be induced because the strength of the hydrogen bond between the water molecules is stronger than the hydrogen bond between the cross-linkable functional group and the water molecule. Water molecules aggregated by hydrogen bonds between the water molecules exist in an ice phase by a freezing process. As a result, the number of cross-linkable functional groups forming hydrogen bonds through interaction with the water molecules is significantly reduced.

In other words, in the freezing process of the coating film, the polymer and water contained in the polymer aqueous solution must first be phase separated, and the phase separation may be induced by hydrogen bonding between water molecules.

Due to the phase separation, the inside of the coating film is divided into (i) a polymer-poor phase and (ii) a polymer-rich phase.

The (i) polymer-poor phase is a portion including water molecules aggregated by hydrogen bonds between water molecules and exists in an ice phase, which may also be referred to as a free water state.

The (ii) polymer-rich phase is a portion containing a polymer phase-separated from water. The phase-separated polymer is a polymer containing a cross-linkable functional group that is free from interaction with water molecules, and is in a free state after phase-separation, and thus does not form crystals by regular folding, and exists in an amorphous state in which movement is relatively free, which is referred to as an amorphous polymer chain.

In addition, some of the cross-linkable functional groups contained in the phase-separated polymer form localized crystallites. The localized crystallites act as cross-linkable junction points to form a cross-linked structure containing the (a), (b) and (c) bonds.

In addition, in the thawing process after the freezing process, the ice contained in the (i) polymer-poor phase melts and evaporates, thereby preparing a polymer solid electrolyte with an increased free volume.

In addition, the freezing may be performed by appropriately selecting conditions sufficient to freeze the coating film. For example, the freezing temperature may be carried out at a temperature of -30 °C to -10 °C, and Specifically, the freezing temperature may be -30 °C or more, -25 °C or more, or -23 °C or more and may be -18 °C or less, - 15 °C or less, or -10 °C or less. If the freezing temperature is less than -30 °C, cracks may occur in the coating film. If the freezing temperature exceeds -10 °C, phase separation between the polymer and water is not sufficiently achieved, so it may be difficult to form a region of the amorphous polymer chain. In addition, the freezing may be performed in consideration of a sufficiently frozen time within the range of 20 to 30 hours.

In addition, the thawing can be performed by appropriately selecting the conditions for thawing the frozen coating film to the extent that it can be applied to the polymer solid electrolyte. For example, the thawing temperature may be 15 °C to 35 °C, or may be room temperature (25 °C). If the thawing temperature is less than 15 °C, the drying efficiency of moisture after thawing (ice melting) may be decreased. If the thawing temperature exceeds 35 °C, the coating film may shrink and wrinkles or warping may occur.

As described above, through the freezing and thawing process above, the bonds of (a), (b) and (c) are induced to form the cross-linked structure, and the amorphous polymer chain may be formed.

Accordingly, the degree of forming of the cross-linked structure may be adjusted depending on the number of the freezing and thawing processes. When the the freezing and thawing process is referred to as 1 cycle, the freezing and thawing process may be performed 1 cycle or more, 2 cycles or more, 3 cycles or more or 5 cycles or more. The upper limit of the cycle is not particularly limited, but may be 10 cycles or less, 13 cycles or less or 15 cycles or less. As the cycle increases in the above-mentioned range, the cross-linked structure is formed more, and accordingly, modulus and strength of the polymer solid electrolyte may be increased.

After step (S3), step (S4) of drying the polymer solid electrolyte after supporting it in a liquid electrolyte may be additionally comprised. The composition and content of the liquid electrolyte are as described above.

**All-solid battery**

The present disclosure also relates to an all-solid battery comprising the polymer solid electrolyte, wherein the all-solid battery comprises a negative electrode, a positive electrode, and a polymer solid electrolyte interposed between the negative electrode and the positive electrode, and wherein the solid electrolyte has the above-described characteristics.

Specifically, the polymer solid electrolyte described above may be suitable as an electrolyte for an all-solid battery because physical crosslinking is formed during freezing and thawing processes, crystallinity is lowered, and ionic conductivity is improved accordingly.

In the present disclosure, the positive electrode comprised in the all-solid battery may comprise a positive electrode active material layer, and the positive electrode active material layer may be formed on one surface of the positive electrode current collector.

The positive electrode active material layer comprises a positive electrode active material, a binder, and an electrically conductive material.

In addition, the positive electrode active material is not particularly limited as long as it is a material capable of reversibly intercalating and de-intercalating lithium ions, and for example, may be, but is not limited to, layered compounds or compounds substituted with one or more transition metals, such as lithium cobalt oxide ($LiCoO_2$), lithium nickel oxide ($LiNiO_2$), $Li[Ni_xCo_yMn_zM_v]O_2$ (wherein, M is any one or two or more elements selected from the group consisting of Al, Ga and In; $0.3 \leq x < 1.0$, $0 \leq y$, $z \leq 0.5$, $0 \leq v \leq 0.1$, $x+y+z+v=1$), $Li(Li_aM_{b-a-b'}M'_{b'})O_{2-c}A_c$ (wherein, $0 \leq a \leq 0.2$, $0.6 \leq b \leq 1$, $0 \leq b' \leq 0.2$, $0 \leq c \leq 0.2$; M comprises Mn and one or more selected from the group consisting of Ni, Co, Fe, Cr, V, Cu, Zn and Ti; M' is one or more selected from the group consisting of Al, Mg and B, and A is one or more selected from the group consisting of P, F, S and N); lithium manganese oxide such as Formula $Li_{1+y}Mn_{2-y}O_4$ (wherein, y is 0 to 0.33), $LiMnO_3$, $LiMn_2O_3$, $LiMnO_2$; lithium copper oxide ($Li_2CuO_2$); vanadium oxide such as $LiV_3O_8$, $LiFe_3O_4$, $V_2O_5$, $Cu_2V_2O_7$; Ni site type lithium nickel oxide represented by Formula $LiNi_{1-y}MyO_2$ (wherein, M is Co, Mn, Al, Cu, Fe, Mg, B or Ga, y is 0.01 to 0.3); lithium manganese composite oxide represented by Formula $LiMn_{2-y}M_yO_2$ (wherein, M is Co, Ni, Fe, Cr, Zn or Ta, y is 0.01 to 0.1) or $Li_2Mn_3MO_8$ (wherein, M is Fe, Co, Ni, Cu or Zn); $LiMn_2O_4$ in which part of Li in the Formula is substituted with alkaline earth metal ions; disulfide compounds; $Fe_2(MoO_4)_3$.

In addition, the positive electrode active material may be contained in an amount of 40 to 80% by weight based on the total weight of the positive electrode active material layer. Specifically, the content of the positive electrode active material may be 40% by weight or more or 50% by weight or more, and may be 70% by weight or less or 80% by weight or less. If the content of the positive electrode active material is less than 40% by weight, the connectivity between the wet positive electrode active material layer and the dry positive electrode active material layer may be insufficient. If the content of the positive electrode active material exceeds 80 % by weight, mass transfer resistance may be increased.

In addition, the binder is a component that assists bonding between the positive electrode active material and the electrically conductive material, and assists in bonding to the current collector. The binder may comprise one or more selected from the group consisting of styrene butadiene rubber, acrylated styrene butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinyl pyrrolidone, polyvinyl pyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise one or more selected from the group consisting of styrene-butadiene rubber, polytetrafluoroethylene, carboxymethyl cellulose, polyacrylic acid, lithium polyacrylate, and polyvinylidene fluoride.

In addition, the binder may be contained in an amount of 1% by weight to 30% by weight based on the total weight of the positive electrode active material layer, and, specifically, the content of the binder may be 1% by weight or more or 3% by weight or more, and may be 15% by weight or less or 30% by weight or less. If the content of the binder is less than 1% by weight, the adhesive force between the positive electrode active material and the positive electrode may be lowered. If the content of the binder exceeds 30% by weight, the adhesive force is improved, but the content of the positive electrode active material is reduced by that amount, and thus the capacity of the battery may be lowered.

In addition, the electrically conductive material is not particularly limited as long as it has excellent electrical conductivity without causing side reactions in the internal environment of the all-solid battery and without causing chemical changes in the battery. The electrically conductive material may be typically graphite or conductive carbon, and for example, as the electrically conductive material, graphite such as natural graphite, artificial graphite; carbon black such as carbon black, acetylene black, Ketjen black, Denka black, thermal black, channel black, furnace black, lamp black, thermal black; carbon-based materials whose crystal structure is graphene or graphite; electrically conductive fibers such as carbon fibers and metal fibers; carbon fluoride; metal powders such as aluminum powder and nickel powder; electrically conductive whiskers such as zinc oxide and potassium titanate; electrically conductive oxides such as titanium oxide; and electrically conductive polymers such as polyphenylene derivatives may be used alone or in combination of two or more thereof, but is not necessarily limited thereto.

The electrically conductive material may be generally contained in an amount of 0.5% by weight to 30% by weight based on the total weight of the positive electrode active material layer, and specifically, the content of the electrically conductive material may be 0.5% by weight or more or 1% by weight or more, and may be 20% by weight or less or 30% by weight or less. If the content of the electrically conductive material is too small, i.e., less than 0.5 % by weight, it is difficult to expect an effect of improving electrical conductivity or the electrochemical properties of the battery may be deteriorated. If the content of the electrically conductive material exceeds 30% by weight and thus is too large, the amount of the positive electrode active material may be relatively small, so that the capacity and energy density may be lowered. A method for incorporating the electrically conductive material to the positive electrode is not particularly limited, and a conventional method known in the art, such as coating on the positive electrode active material, may be used.

In addition, the positive electrode current collector supports the positive electrode active material layer, and serves to transfer electrons between the external conductive wire and the positive electrode active material layer.

The positive electrode current collector is not particularly limited as long as it has high electrical conductivity without causing chemical changes in the all-solid battery. For example, as the positive electrode current collector, copper, stainless steel, aluminum, nickel, titanium, palladium, sintered carbon; a copper or stainless steel surface-treated with carbon, nickel, silver, etc.; an aluminum-cadmium alloy, etc. may be used.

The positive electrode current collector may have a fine irregularity structure on the surface of the positive electrode current collector or have a three-dimensional porous structure, in order to strengthen the bonding force with the positive electrode active material layer. Accordingly, the positive electrode current collector may comprise various forms such as a film, a sheet, a foil, a mesh, a net, a porous body, a foam, and a non-woven fabric.

The positive electrode as described above may be prepared by the conventional method, and specifically, the positive electrode is manufactured by coating and drying a composition for forming the positive electrode active material layer prepared by mixing the positive electrode active material, the electrically conductive material and the binder in an organic solvent, onto the current collector, and optionally compression-molding it onto the current collector to improve the electrode density. At this time, as the organic solvent, it is preferable to use one that can uniformly disperse the positive electrode active material, the binder, and the electrically conductive material and that evaporates easily. Specifically, acetonitrile, methanol, ethanol, tetrahydrofuran, water, isopropyl alcohol and the like are exemplified.

In the present disclosure, the positive electrode comprised in the all-solid battery may comprise a positive electrode active material layer, and the positive electrode active material layer may be formed on one surface of the positive electrode current collector.

The negative electrode active material may be a material capable of reversibly intercalating or de-intercalating lithium ion ($Li^+$), a material capable of reacting with lithium ion to reversibly form a lithium-containing compound, lithium metal or a lithium alloy.

The material capable of reversibly intercalating or de-intercalating lithium ion ($Li^+$) may be, for example, crystalline carbon, amorphous carbon or mixtures thereof. The material capable of reacting with lithium ion ($Li^+$) to reversibly form a lithium-containing compound may be, for example, tin oxide, titanium nitrate or silicon. The lithium alloy may be, for example, an alloy of lithium (Li) and the metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of a lithium metal thin film or lithium metal powder.

The negative electrode active material may be contained in an amount of 40 to 80% by weight based on the total weight of the negative electrode active material layer. Specifically, the content of the negative electrode active material may be 40 % by weight or more or 50 % by weight or more, and may be 70 % by weight or less or 80 % by weight or less. If the content of the negative electrode active material is less than 40% by weight, the connectivity between the wet negative electrode active material layer and the dry negative electrode active material layer may be insufficient. If the content of the negative electrode active material exceeds 80 % by weight, mass transfer resistance may be increased.

In addition, the binder is the same as described above for the positive electrode active material layer.

In addition, the electrically conductive material is the same as described above for the positive electrode active material layer.

In addition, the negative electrode current collector is not particularly limited as long as it has electrical conductivity without causing chemical change in the battery, and for example, may be copper, stainless steel, aluminum, nickel, titanium, sintered carbon; copper or stainless steel surface-treated with carbon, nickel, titanium, silver, etc.; or aluminum-cadmium alloy. In addition, the negative electrode current collector may be used in various forms, such as a film having a fine irregularity structure on its surface, a sheet, a foil, a net, a porous body, a foam, and a non-woven fabric, as in the positive electrode current collector.

The manufacturing method of the negative electrode is not particularly limited, and may be manufactured by forming a negative electrode active material layer on a negative electrode current collector using a layer or film formation method commonly used in the art. For example, a method such as pressing, coating, or vapor deposition may be used. Also, a case where a thin film of a metal lithium is formed on a metal plate by initial charging after assembling the battery without a lithium thin film on the current collector is also comprised in the negative electrode of the present disclosure.

In addition, the present disclosure provides a battery module comprising the all-solid battery as a unit cell, a battery pack comprising the battery module, and a device comprising the battery pack as a power source.

In this case, examples of the devices may comprise, but are not limited to, a power tool that is powered and moved by an electric motor; electric cars including an electric vehicle (EV), a hybrid electric vehicle (HEV), a plug-in hybrid electric vehicle (PHEV), and the like; an electric motorcycle including an electric bike (E-bike) and an electric scooter (E-scooter); an electric golf cart; and a power storage system. Hereinafter, preferred examples of the present disclosure will be described in order to facilitate understanding of the present disclosure. It will be apparent to those skilled in the art, however, that the following examples are only illustrative of the present disclosure and various changes and modifications can be made within the scope and spirit of the present disclosure, and that such variations and modifications are within the scope of the appended claims.

In the following Examples and Comparative Examples, polymer solid electrolytes were prepared according to whether the cross-linkable functional group is contained, the type of polymer containing the cross-linkable functional group, the molar ratio of the cross-linkable functional group and the lithium ion, and whether the freezing/thawing process is applied, as shown in Table 1 below.

Table 1:

| | Polymer comprising cross-linkable functional group | | Molar ratio of cross-linkable functional group and lithium([Li] / [OH]) | whether the freezing/thawing process is applied |
| --- | --- | --- | --- | --- |
| | Name | Weight average molecular weight (Mw, g/mol) | | |
| Example 1 | PVA | 89,000 | 0.4 | applied |
| Example 2 | PVA | 85,000 | 0.4 | applied |
| Example 3 | PVA | 100,000 | 0.4 | applied |
| Example 4 | PVA | 89,000 | 0.1 | applied |
| Example 5 | PVA | 89,000 | 0.2 | applied |
| Example 6 | PVA | 89,000 | 0.3 | applied |
| Comparative Example 1 | PVA | 89,000 | 0.4 | not applied (high temperature drying, 80°C) |
| Comparative Example 2 | PEO (cross-linkable functiona 1 group is not contained ) | 4,000,000 | 0.4 | applied |
| Comparative Example 3 | PVA | 89,000 | 0.4 | not applied (room temperature drying, 25°C) |
| Comparative Example 4 | PAA | 100,000 | 0.4 | applied |
| Comparative Example 5 | PVA | 50,000 | 0.4 | applied |
| Comparative Example 6 | PVA | 146,000 | 0.4 | applied |
| Comparative Example 7 | PVA | 89,000 | 0.5 | applied |
| Comparative Example 8 | PVA | 89,000 | 0.52 | applied |

**Example 1**

PVA (Mw: 89,000 g/mol; degree of hydrolysis: >99%) was mixed with water to prepare a 10% PVA aqueous solution. LiTFSI was added to the PVA aqueous solution and stirred to prepare a solution containing PVA, which is a polymer having a cross-linkable functional group, and LiTFSI, which is a lithium salt. At this time, the molar ratio ([Li]/[OH]) of "OH", which is the cross-linkable functional group of the PVA, and "Li" of the lithium salt was set to 0.4.

The solution was applied on SUS foil as a substrate by bar coating to form a coating film, then frozen at -20 °C for 24 hours and thawed at 25 °C to prepare a polymer solid electrolyte.

**Example 2**

A polymer solid electrolyte was prepared in the same manner as in Example 1, except that PVA having a weight average molecular weight (Mw) of 85,000 g/mol is used.

**Example 3**

A polymer solid electrolyte was prepared in the same manner as in Example 1, except that PVA having a weight average molecular weight (Mw) of 100,000 g/mol is used.

**Example 4**

A polymer solid electrolyte was prepared in the same manner as in Example 1, except that the molar ratio ([Li]/[OH]) of "OH", which is the cross-linkable functional group of the PVA, and "Li" of the lithium salt was set to 0.1.

**Example 5**

A polymer solid electrolyte was prepared in the same manner as in Example 1, except that the molar ratio ([Li]/[OH]) of "O" contained in the cross-linkable functional group of the PVA, and "Li" of the lithium salt was set to 0.2.

**Example 6**

A polymer solid electrolyte was prepared in the same manner as in Example 1, except that the molar ratio ([Li]/[OH]) of "O" contained in the cross-linkable functional group of the PVA, and "Li" of the lithium salt was set to 0.3.

**Comparative Example 1**

A polymer solid electrolyte was prepared in the same manner as in Example 1, except that a solution containing PVA, which is the polymer having a cross-linkable functional group, and LiTFSI, which is lithium salt, is applied on SUS foil as a substrate, and then dried at 80°C.

**Comparative Example 2**

A polymer solid electrolyte was prepared in the same manner as in Example 1, except that PEO, which is the polymer that does not have a cross-linkable functional group, is used instead of PVA.

**Comparative Example 3**

A polymer solid electrolyte was prepared in the same manner as in Example 1, except that a solution containing PVA, which is the polymer having a cross-linkable functional group, and LiTFSI, which is lithium salt, is applied on SUS foil as a substrate, and then dried at room temperature (25°C).

**Comparative Example 4**

A polymer solid electrolyte was prepared in the same manner as in Example 1, except that a 35% aqueous solution of poly(acrylic acid) (PAA) (Mw: 100,000 g/mol) instead of PVA is used.

**Comparative Example 5**

A polymer solid electrolyte was prepared in the same manner as in Example 1, except that PVA having a weight average molecular weight (Mw) of 50,000 g/mol is used.

**Comparative Example 6**

A polymer solid electrolyte was prepared in the same manner as in Example 1, except that PVA having a weight average molecular weight (Mw) of 146,000 g/mol is used.

**Comparative Example 7**

A polymer solid electrolyte was prepared in the same manner as in Example 1, except that the molar ratio ([Li]/[OH]) of "O" contained in the cross-linkable functional group of the PVA, and "Li" of the lithium salt was set to 0.5.

**Comparative Example 8**

A polymer solid electrolyte was prepared in the same manner as in Example 1, except that the molar ratio ([Li]/[OH]) of "O" contained in the cross-linkable functional group of the PVA, and "Li" of the lithium salt was set to 0.52.

**Experimental Example 1**

In order to measure the ionic conductivity of the polymer solid electrolytes in the form of films prepared in Examples and Comparative Examples, a coin cell was prepared by punching out the polymer solid electrolyte in a circular shape with a size of 1.7671 cm$^2$, and placing the punched polymer solid electrolyte between two sheets of stainless steel (SUS).

After measuring the resistance at 25 °C using an electrochemical impedance spectrometer (EIS, VM3, Bio Logic Science Instrument) at an amplitude of 10 mV and a scan range of 500 KHz to 20 MHz, the ionic conductivity of the polymer solid electrolyte was calculated using Equation 1 below.

[Equation 1]

$$\sigma_i = \frac{L}{RA}$$

wherein $\sigma_i$ is the ionic conductivity (S/cm) of the polymer solid electrolyte,

R is the resistance ($\Omega$) of the polymer solid electrolyte measured with the electrochemical impedance spectrometer,
L is the thickness ($\mu$m) of the polymer solid electrolyte, and
A refers to the area (cm$^2$) of the polymer solid electrolyte.

The results of observing the ionic conductivity of the polymer solid electrolyte calculated using Equation 1 above, on whether it is possible to form a free-standing film, and the appearance of the polymer solid electrolyte are shown in Table 2 below. At this time, whether it is possible to form a free-standing film (formation: o, non-formation: X) and the appearance of the polymer solid electrolyte were visually observed.

Table 2:

|  | Ionic conductivity (S/cm) | Whether it is possible to form a free-standing film | Sample status after freezing/ thawing process | Note |
|---|---|---|---|---|
| Example 1 | $1.6\times10^{-4}$ | ◯ | free-standing film | - |
| Example 2 | $1.2\times10^{-4}$ | ◯ | free-standing film | - |
| Example 3 | $1.0\times10^{-4}$ | ◯ | free-standing film | - |
| Example 4 | $4.1\times10^{-7}$ | ◯ | free-standing film | Free-standing film is formed, but ionic conductivity is low and brittleness is also observed. |
| Example 5 | $1.5\times10^{-5}$ | ◯ | Flexible film | - |
| Example 6 | $2.5\times10^{-5}$ | ◯ | Flexible film | - |
| Comparative Example 1 | - | X | gel | -Impossible to prepare uniform sample on substrate<br>- Not in the form of a film, but in the form of a gel with high viscosity |

(continued)

| | Ionic conductivity (S/cm) | Whether it is possible to form a free-standing film | Sample status after freezing/ thawing process | Note |
|---|---|---|---|---|
| Comparative Example 2 | - | X | liquid-phase | No attempt was made to measure the ionic conductivity of liquid phase sample |
| Comparative Example 3 | $4.2 \times 10^{-8}$ | X | film | Low mechanical strength of film due to absence of crosslinking |
| Comparative Example 4 | - | X | liquid-phase | -When freezing, it freezes and then changes to the initial solution state as it thaws-No attempt was made to measure the ionic conductivity of liquid phase sample |
| Comparative Example 5 | - | X | liquid-phase | No attempt was made to measure the ionic conductivity of liquid phase sample |
| Comparative Example 6 | - | X | impossibl e to prepare | Molecular weight is too high, so it is impossible to prepare a solution for forming a coating film |
| Comparative Example 7 | 1.8x10-3 | X | gel | Although the ionic conductivity is high, it is in the form of a gel with high viscosity, not in the form of a film |
| Comparative Example 8 | 1.9x10-3 | X | gel | Although the ionic conductivity is high, it is in the form of a gel with high viscosity, not in the form of a film |

As shown in Table 2 above, it was confirmed that when PVA having a molecular weight in an appropriate range, and a molar ratio ([Li]/[OH]) of the cross-linkable functional group and lithium of lithium salt is used, a polymer solid electrolyte in the form of a free-standing film can be prepared by applying the freezing and thawing process (Example 1, Example 2, Example 3, Example 5, and Example 6).

Comparative Example 4 is a case where PAA is used as a polymer containing a cross-linkable functional group, and since it freezes during the freezing process after the formation of the coating film and then becomes a liquid phase again during the thawing process, it was not possible to prepare a polymer solid electrolyte in the form of a free-standing film.

In addition, Comparative Example 5 was prepared as a liquid phase due to the low molecular weight of PVA, and a polymer solid electrolyte in the form of a free-standing film could not be obtained.

In addition, in the case of Comparative Example 6, a solution for forming a coating film could not be obtained because the molecular weight of PVA was high, and thus the preparation process of electrolyte could not be performed.

In addition, in the case of Example 4, a polymer solid electrolyte in the form of a free-standing film was prepared when observed with the naked eye, but the ionic conductivity was remarkably low, and brittleness was also observed. This is because the molar ratio ([Li]/[OH]) of the cross-linkable functional group and lithium is small, and a cross-linked structure was formed, but it was not sufficiently formed to be suitable for application to a polymer solid electrolyte.

In addition, in the case of Comparative Example 7, since the molar ratio ([Li]/[OH]) of cross-linkable functional group and lithium was large, a gel with high viscosity, not a film, was prepared. It was confirmed that although the gel described above had high ionic conductivity, it is not suitable for application as a polymer solid electrolyte because it is in the form of a gel rather than a film. The form of a gel means a solid state with weak mechanical strength or a liquid state with high viscosity that cannot be separated from the substrate, and it is difficult to apply as a polymer solid electrolyte.

In addition, in the case of Comparative Example 8, the molar ratio ([Li]/[OH]) of cross-linkable functional group and lithium was larger than that of Example 1, and gel having high viscosity, not a film, was prepared. It was confirmed that although the gel described above has high ionic conductivity, it is not suitable for application as a polymer solid electrolyte because it is in the form of a gel rather than a film.

In the case of Comparative Example 1, an electrolyte was prepared using a high temperature drying process at 80°C, and an electrolyte in the form of a highly viscous gel was prepared. It was impossible to form a uniform coating film on the substrate, and the phenomenon of air bubbles, agglomeration and warpage was observed during the formation of the coating film.

In the case of Comparative Example 2, the electrolyte was prepared using PEO that does not have a cross-linkable functional group, and it was in the form of a liquid, not a film.

In the case of Comparative Example 3, it can be seen that a polymer solid electrolyte is prepared using a drying process at room temperature, and due to the absence of physical crosslinking formed by the freezing and thawing process, the polymer solid electrolyte has low mechanical strength and also low ionic conductivity.

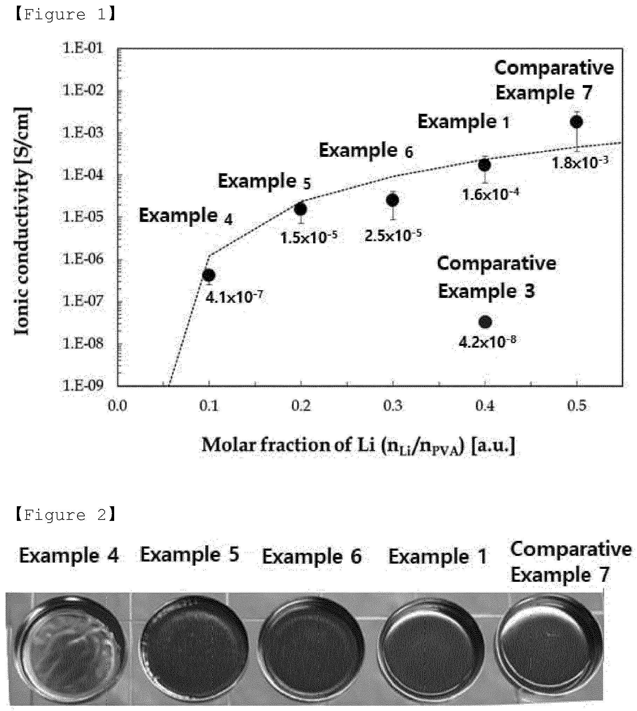

FIG. 1 is a graph showing the tendency of the ionic conductivity of the electrolyte according to the molar ratio ([Li]/[OH]) of the cross-linkable functional group and the lithium salt.

Referring to FIG. 1, it can be seen that as the molar ratio of lithium and cross-linkable functional groups ([Li]/[OH], nLi/nPVA) in the electrolyte prepared by the freezing and thawing process is increased, the ionic conductivity of the polymer solid electrolyte tends to increase. Comparative Example 3 is prepared by a drying process at room temperature, and it can be seen that the ionic conductivity is remarkably low.

FIG. 2 is a photograph showing the form of electrolyte according to the molar ratio ([Li]/[OH]) of the cross-linkable functional group and lithium.

Referring to FIG. 2, it can be seen that in the case of Example 4 in which the molar ratio ([Li]/[OH]) of the cross-linkable functional group and lithium is 0.1, a polymer solid electrolyte in the form of a film with brittleness is prepared, in the case of Comparative Example 7 in which the molar ratio is 0.5, a polymer solid electrolyte in the form of a gel with high viscosity is prepared, and in the case of Example 1, Example 5 and Example 6 in which the molar ratio is greater than 0.1 and less than 0.5, a polymer solid electrolyte in the form of a film is prepared.

**Example 7**

A polymer solid electrolyte was prepared in the same manner as Example 1, except that 2 cycles of freezing and thawing processes were performed.

**Example 8**

A polymer solid electrolyte was prepared in the same manner as Example 1, except that 3 cycles of freezing and thawing processes were performed.

**Example 9**

A polymer solid electrolyte was prepared in the same manner as Example 1, except that 5 cycles of freezing and thawing processes were performed.

**Example 10**

A polymer solid electrolyte was prepared in the same manner as Example 1, except that 10 cycles of freezing and thawing processes were performed.

**Comparative Example 9**

PVA (Mw: 89,000 g/mol; degree of hydrolysis: > 99%) was mixed with water to prepare a 10 wt% PVA aqueous solution, applied on SS foil, and dried at high temperature (90°C, 3 hours) to prepare a PVA film.

**Comparative Example 10**

A PVA film was prepared in the same manner as Comparative Example 9, except that boric acid was added as a crosslinking agent.

**Experiment Example 2**

An experiment was conducted to compare the presence or absence and degree of formation of cross-linked structures inside the polymer solid electrolyte.

Since the experiment is to compare only the presence or absence and degree of formation of a cross-linked structure, it used the PVA film of Comparative Example 8, which did not include a cross-linking structure, and Comparative Example 9, which had a chemical cross-linking structure formed by a cross-linking agent, as objects of comparison.

(1) Checking the degree of swelling

After immersing the target sample for the experiment in water at room temperature (25°C) for 12 hours, the degree of swelling of the sample was checked, and the degree of swelling was determined based on the following criteria.

<Criteria for determining the degree of swelling>

◎: Swelled to 80% or more of total volume.

O: Swelled to 50% or more of total volume.

△: Swelled to 20% or more of total volume.

X: Swelled to less than 10% of total volume.

(2) Modulus

The modulus was measured with a Universal testing machine (UTM) .

[Table 3]

| | Type of film | Number of freezing/ thawing processes performed (cycle) | Modulus (MPa) | Degree of swelling (12 hours@25 °C) | Presence or absence of cross-linked structure |
|---|---|---|---|---|---|
| Example 1 | Polymer solid electrolyte film containing PVA | 1 | <0.01 | ○ | Physical cross-linked structure |
| Example 7 | Polymer solid electrolyte film containing PVA | 2 | <0.1 | △ | Physical cross-linked structure |
| Example 8 | Polymer solid electrolyte film containing PVA | 3 | <1 | X | Physical cross-linked structure |
| Example 9 | Polymer solid electrolyte film containing PVA | 5 | 1 ~ 5 | X | Physical cross-linked structure |
| Example 10 | Polymer solid electrolyte film containing PVA | 10 | 1 ~ 5 | X | Physical cross-linked structure |
| Comparative Example 9 | PVA film | X (Drying at high temperatu re) | 1000 | ◎ | - |
| Comparative Example 10 | Film containing PVA and cross-linking agent | X (Drying at high temperatu re) | 200 500 | X | Chemical cross-linked structure |

Referring to Table 3 above, it can be seen that Examples 1 and 7 to 10 relate to polymer solid electrolytes prepared by freezing and thawing processes and they exhibit a modulus above a certain level, and as the number of cycles of freezing and thawing processes is increased, their moduli also were increased together. In addition, as the number of cycles is increased, the degree of swelling is also decreased. In general, the degree of swelling and mechanical properties of polymers are greatly affected by the degree of crosslinking. The formation of cross-linking points serves to increase the internal resistance of the polymer chain, thereby causing an increase in swelling resistance and mechanical strength. In particular, the formation of physical cross-links based on the freeze-thaw process is influenced by the number of repetitions of the freeze-thaw process. From the results that, as the number of cycles is increased, the modulus is increased and the degree of swelling is decreased, it can be seen that as the number of cycles is increased, the cross-linked structure is also increased. Although Example 1 showed that the degree of swelling was 50% or more of the total volume, this is a result measured after 12 hours at room temperature, and is suitable for the physical properties required for polymer solid electrolyte for all-solid-state batteries.

It can be seen that the PVA film of Comparative Example 9 swells to 80% or more of the total volume, and as a result, no cross-linked structure is contained within the polymer.

It was found that in the PVA film of Comparative Example 10, a chemical cross-linked structure was formed due to the addition of boric acid which is a cross-linking agent, and the modulus was reduced compared to Comparative Example 9, in which no cross-linked structure was formed.

In the PVA film of Comparative Example 10, crystallinity was reduced as a chemical cross-linked structure was formed, thereby increasing the flexibility of the polymer, and thus, the modulus was decreased compared to Comparative Example 9.

On the other hand, Examples 1 and 7 to 10, unlike the manufacturing method of Comparative Examples 9 and 10, correspond to a PVA film in the form of a hydrogel based on physical cross-linking formed using freezing and thawing processes. This indicates that the modulus tends to increase as crosslinking increases. In Examples 1 and 7 to 10, as the number of cycles of freezing and thawing processes increased, the cross-linked structure also increased and the modulus also tended to increase. Through freezing and thawing processes, some of the cross-linkable functional groups contained in PVA form localized crystallites, and the localized crystallites act as cross-linkable junction points, thereby increasing the modulus.

Although the present disclosure has been described above with limited examples and drawings, the present disclosure is not limited thereto, and various modifications and variations are possible, by those of ordinary skill in the art to which the present disclosure belongs, within the scope of equivalents to the technical spirit of the present disclosure and the claims to be described below.

## Claims

1.  A polymer solid electrolyte comprising a polymer containing cross-linkable functional groups, a lithium salt and a solvent,

    wherein the polymer solid electrolyte comprises a cross-linked structure; and an amorphous polymer chain containing the cross-linkable functional groups, and
    wherein the cross-linked structure comprises (a) a crosslinking between cross-linkable functional group, (b) a crosslinking between cross-linkable functional group and the solvent, and (c) bonding between the cross-linkable functional group and the lithium salt.

2.  The polymer solid electrolyte according to claim 1, wherein

    (a) the crosslinking between the cross-linkable functional group comprises a hydrogen bond,
    (b) the crosslinking between cross-linkable functional group and the solvent comprises a hydrogen bond, and
    (c) the bonding between the cross-linkable functional group and the lithium salt comprises a bond by Lewis acid-base interaction.

3.  The polymer solid electrolyte according to claim 1, wherein the cross-linkable functional group comprises one or more selected from the group consisting of a hydroxyl group, a carboxyl group, and an amide group.

4.  The polymer solid electrolyte according to claim 1, wherein the polymer containing the cross-linkable functional groups comprises one or more selected from the group consisting of polyvinyl alcohol(PVA), gelatin, methylcellulose, agar, dextran, poly(vinyl pyrrolidone), poly(ethylene oxide), poly(acryl amide), poly(acrylic acid) (PAA), starch-carboxymethyl cellulose, hyaluronic acid-methylcellulose, chitosan, poly(N-isopropylacrylamide), and amino-terminated polyethylene glycol (amino-terminated PEG).

5.  The polymer solid electrolyte according to claim 1, wherein the weight average molecular weight (Mw) of the polymer containing the cross-linkable functional groups is 80,000 g/mol to 130,000 g/mol.

6.  The polymer solid electrolyte according to claim 1, wherein the polymer containing the cross-linkable functional groups comprises one or more selected from the group consisting of polyvinyl alcohol(PVA), gelatin, methylcellulose, agar, dextran, poly(vinyl pyrrolidone), poly(ethylene oxide), poly(acryl amide), poly(acrylic acid), starch-carboxymethyl cellulose, hyaluronic acid-methylcellulose, chitosan, poly(N-isopropylacrylamide), and amino-terminated polyethylene glycol (amino-terminated PEG).

7. The polymer solid electrolyte according to claim 1, wherein the lithium salt comprises one or more selected from the group consisting of $(CF_3SO_2)_2NLi$ (lithium bis(trifluoromethanesulfonyl)imide, LiTFSI), $(FSO_2)_2NLi$ (lithium bis(fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, and $LiC(CF_3SO_2)_3$.

8. The polymer solid electrolyte according to claim 1, wherein the molar ratio ([Li]/[G]) of the cross-linkable functional group ([G]) of the polymer and lithium ([Li]) of the lithium salt is exceeding 0.1 and less than 0.5.

9. The polymer solid electrolyte according to claim 1, wherein the solvent comprises water.

10. The polymer solid electrolyte according to claim 1, wherein the polymer solid electrolyte is in the form of a free-standing film or coating layer.

11. The polymer solid electrolyte according to claim 1, wherein the ionic conductivity of the polymer solid electrolyte is $10^{-4}$ S/cm or more.

12. The polymer solid electrolyte according to claim 1, wherein the polymer solid electrolyte further comprises a liquid electrolyte.

13. A method for preparing the polymer solid electrolyte of comprising the steps of,

(S1) adding lithium salt to the solution of a polymer containing a cross-linkable functional groups to form a solution for forming a polymer solid electrolyte;
(S2) forming a coating film by applying the solution for forming a polymer solid electrolyte on a substrate; and
(S3) freezing and thawing the coating film.

14. The method for preparing the polymer solid electrolyte according to claim 13, wherein the polymer solid electrolyte comprises a cross-linked structure,

the cross-linking structure comprises (a) cross-linking between cross-linkable functional groups, (b) cross-linking between cross-linkable functional groups and solvent, and (c) bonding between cross-linkable functional groups and lithium salts,
the (a) crosslinking between the cross-linkable functional groups comprises a hydrogen bond,
the (b) crosslinking between the cross-linkable functional group and the solvent comprises a hydrogen bond, and
the (c) bonding between the cross-linkable functional group and the lithium salt comprises a bond by Lewis acid-base interaction.

15. The method for preparing the polymer solid electrolyte according to claim 13, wherein the freezing is carried out at -30 °C to -10 °C.

16. The method for preparing the polymer solid electrolyte according to claim 13, wherein the thawing is carried out at 15 °C to 35 °C.

17. An all-solid battery comprising the polymer solid electrolyte of any one of claims 1 to 12.

【Figure 1】

【Figure 2】

Example 4　Example 5　Example 6　Example 1　Comparative Example 7

| INTERNATIONAL SEARCH REPORT | International application No. |
|---|---|
| | **PCT/KR2023/007469** |

**A.    CLASSIFICATION OF SUBJECT MATTER**

**H01M 10/0565**(2010.01)i; **H01M 10/0564**(2010.01)i; **H01M 10/052**(2010.01)i; **C08J 5/22**(2006.01)i

According to International Patent Classification (IPC) or to both national classification and IPC

**B.    FIELDS SEARCHED**

Minimum documentation searched (classification system followed by classification symbols)

H01M 10/0565(2010.01); H01M 10/052(2010.01); H01M 12/08(2006.01); H01M 4/58(2010.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고체 전해질(solid electrolyte), 가교 결합성 작용기(cross-linkable functional group), 리튬염(lithium salt), 냉동-해동 공정(freeze-thaw process)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2018-0076709 A (LG CHEM, LTD.) 06 July 2018 (2018-07-06)<br>See paragraphs [0063], [0070] and [0100]-[0101]; and claims 6-7 and 12. | 1-17 |
| Y | YIN, Juanjuan et al. MXene-based film electrode and all-round hydrogel electrolyte for flexible all-solid supercapacitor with extremely low working temperature. Cell Reports Physical Science. 2022 (online publication date: 11 May 2022), vol. 3, pp. 1-18.<br>See abstract; pages 7-8 and 15; and figure 2. | 1-17 |
| Y | KR 10-2019-0062228 A (LG CHEM, LTD.) 05 June 2019 (2019-06-05)<br>See paragraph [0216]. | 12 |
| A | KR 10-2020-0034284 A (LG CHEM, LTD.) 31 March 2020 (2020-03-31)<br>See entire document. | 1-17 |
| A | KR 10-2020-0033675 A (LG CHEM, LTD.) 30 March 2020 (2020-03-30)<br>See entire document. | 1-17 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 September 2023** | **01 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/007469**

| Patent document cited in search report | | | Publication date (day/month/year) | Patent family member(s) | | | Publication date (day/month/year) |
|---|---|---|---|---|---|---|---|
| KR | 10-2018-0076709 | A | 06 July 2018 | KR | 10-2134458 | B1 | 15 July 2020 |
| KR | 10-2019-0062228 | A | 05 June 2019 | CN | 110998954 | A | 10 April 2020 |
| | | | | EP | 3648229 | A1 | 06 May 2020 |
| | | | | EP | 3648229 | A4 | 03 June 2020 |
| | | | | EP | 3648229 | B1 | 10 August 2022 |
| | | | | KR | 10-2255538 | B1 | 25 May 2021 |
| | | | | US | 11670800 | B2 | 06 June 2023 |
| | | | | US | 2020-0168950 | A1 | 28 May 2020 |
| | | | | WO | 2019-107855 | A1 | 06 June 2019 |
| KR | 10-2020-0034284 | A | 31 March 2020 | None | | | |
| KR | 10-2020-0033675 | A | 30 March 2020 | CN | 111837286 | A | 27 October 2020 |
| | | | | EP | 3761433 | A1 | 06 January 2021 |
| | | | | EP | 3761433 | A4 | 23 June 2021 |
| | | | | JP | 2021-518977 | A | 05 August 2021 |
| | | | | JP | 2022-186703 | A | 15 December 2022 |
| | | | | JP | 7199447 | B2 | 05 January 2023 |
| | | | | KR | 10-2510293 | B1 | 14 March 2023 |
| | | | | US | 2021-0005930 | A1 | 07 January 2021 |
| | | | | WO | 2020-060292 | A1 | 26 March 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220067041
- KR 1020230070049

- CN 112259788